# EUROPÄISCHE PATENTANMELDUNG

(11) **EP 0 720 973 A2**
(43) Veröffentlichungstag der Anmeldung: **10.07.1996**
(21) Anmeldenummer: 96100901.6
(22) Anmeldetag: 02.07.1994
(51) Int. Cl.: C04B 35/532, C04B 35/52, B09B 3/00

(54) **Verfahren zum Wiederverwerten von Kohlenstoffasern enthaltenden Abfällen oder Reststücken**

(30) Priorität: 31.07.1993 DE 4325775
(62) Teilanmeldung aus: 94110312.9
(71) Anmelder: SGL TECHNIK GMBH, D-86405 Meitingen (DE)
(72) Erfinder: Habenicht, Hinrich, Dipl.-Ing., D-86368 Gersthofen (DE); Gruber, Udo, Dipl.-Ing., D-86356 Neusäss (DE)

(57) **Zusammenfassung**

Es wird ein Verfahren beschrieben, nach dem Kohlenstofffasern enthaltende Abfälle oder/und Reststücke, in denen die Kohlenstoffasern mit einer plastischen, klebrigen oder erweichbaren aber carbonisierbaren Substanz überzogen sind, wiederverwertet werden. Wiederverwertbare Stoffe dieser Art sind insbesondere Abfälle und Reste von Prepregs, mit Kunststoffen oder carbonisierbaren Bindemitteln überzogene Gelege von Fasern, Fäden, Kabeln, Tauen sowie Gewebe, Gestricke, Gewirke und Wirrlagen dieser Art. Die Ausgangsstoffe werden in einer heiz- und kühlbaren Preßform übereinandergelegt und gegebenenfalls unter Erwärmen soweit erhitzt, daß vorhandene, bei Raumtemperatur feste verkokbare, die Kohlenstoffasern bedeckende Überzüge wie thermoplastische Kunststoffe oder Peche Bindeeigenschaften entwickeln und der Inhalt der Form unter Zusammenpressen zu einem zusammenhängenden Körper verdichtet wird. Sodann wird der Körper der Preßform entnommen und unter nicht oxidierenden Bedingungen verkokt. Der danach erhaltene, ganz aus Kohlenstoff bestehende Körper kann noch durch Imprägnieren mit kohlenstoffhaltigen Mitteln und nachfolgendes abermaliges Verkoken weiterveredelt werden.

## Beschreibung

Die Erfindung betrifft ein Verfahren zum Wiederverwerten von Abfällen und/oder Reststücken von Kohlenstoffasern oder von Fäden, Kabeln, Tauen, Kordeln aus Kohlenstofffasern oder von aus Kohlenstoff bestehenden Gelegen aus Fasern, Fäden, Kabeln, Tauen oder von aus Kohlenstofffasern bestehenden Lagen von Geweben, Gestricken, Gewirken, Wirrlagen, bei denen mindestens die Oberflächen der Fasern mit einer plastischen oder erweichbaren carbonisierbaren Substanz bedeckt sind.

Die Beseitigung nicht mehr benötigter oder unbrauchbar gewordener Formkörper aus Verbundwerkstoffen mit Kohlenstoffaserverstärkung oder von kohlenstoffaserhaltigen Abfällen aus Herstellungsprozessen von Verbundwerkstoffen ist ein zunehmend größer werdendes Problem, das auch der aus technischer Sicht vorteilhaften Ausweitung des Einsatzes derartiger Verbundwerkstoffe entgegensteht. Sofern diese Verbundwerkstoffe oder deren Abfälle bzw. Reststücke in umweltverträglichem Zustand vorliegen, könnten sie deponiert werden. Ungünstigerweise müssen viele dieser Stoffe, z.B. die die vorliegende Erfindung betreffenden Halbfertigprodukte, wegen ihrer chemischen Zusammensetzung sogar zu hohen Kosten als Sondermüll entsorgt werden. Aber auch für den deponierbaren Teil dieser Stoffklasse wäre eine Deponierung ein sehr teurer Weg der Entsorgung, da es sich hier wegen ihrer Zusammensetzung aus hochwertigen Kohlenstoffasern und organischen Polymeren oder Polymergemischen um Wertstoffe handelt, die für den ohnehin immer knapper und teurer werdenden Deponieraum zu schade sind. Es wurden deshalb Konzepte und Verfahren zu einer nutzbringenden Verwertung ausgearbeitet. Diese Konzepte sind jedoch mit Nachteilen behaftet, die ihre Anwendung in vielen Fällen erschwert oder verhindert.

Da die die Erfindung betreffenden Gegenstände in aller Regel aus zu 100% oxidierbaren Stoffen bestehen, wäre eine Verbrennung ein Weg zu ihrer Beseitigung. Aus heutiger Sicht ist dieses Verfahren jedoch zu teuer. Selbst bei Nutzung der entstehenden Verbrennungswärme muß hierbei mit Kosten von DM 240,-- bis 400,-- pro t gerechnet werden (Chemische Rundschau 45, 1992, S. 18-22), so daß dieses Verfahren erst bei wesentlich höheren Erdölpreisen als heute rentabel arbeitet (Tagungsbericht zur Fachtagung des Süddeutschen Kunststoffzentrums vom 18./19. Oktober 1989 in Würzburg). Andere Verfahren zur Verwertung sehen eine thermische oder chemische Spaltung vor (siehe letztgenannte Literaturstelle). Die Verfahren zur chemischen Spaltung erfordern große Mengen einheitlich zusammengesetzter Verbundwerkstoffe, um den erforderlichen anlagentechnischen und energetischen Aufwand auch nur einigermaßen zu rechtfertigen. Diese Voraussetzungen liegen bei der diese Erfindung betreffenden Werkstoffklasse jedoch zur Zeit nicht vor. Thermische Abbauverfahren dienen entweder der vorläufig noch zu teuren Energiegewinnung oder man kann dadurch Schwel- und Crackprodukte, die wiederverwertbar sind, erhalten. Aber auch letzteres Verfahren ist im Vergleich zu den derzeitigen Erdöl- und Kraftstoffpreisen noch zu teuer. Die Rückstände der thermischen Verfahren werden bis auf das im folgenden beschriebene Verfahren deponiert. Bei diesem Verfahren, bei dem mit Kohlenstoffasern verstärkte Kunststoffe aufgearbeitet werden sollen, wird bei einer ersten thermischen Behandlung zunächst das Matrixharz pyrolysiert und es werden die dabei zurückbleibenden Kohlenstoffasern zu quasi unidirektionalen Prepregs weiterverarbeitet (Chemische Rundschau 45, 1992, S. 18 bis 22). Der Nachteil dieses Verfahrens ist, daß hier nur der erhaltene Rückstand an Fasern wiederverwendet wird.

Es war die Aufgabe der Erfindung, ein Verfahren anzugeben, mittels dessen nicht mehr verwendbare Teile oder Reststücke aus den eingangs genannten, Kohlenstoffasern enthaltenden Fäden, Kabeln, Tauen, Kordeln, sowie Gelegen und Lagen von textilen Flächengebilden, in denen die Oberflächen der Fasern mindestens teilweise mit einer plastischen oder erweichbaren verkok- oder carbonisierbaren Substanz überzogen sind, unter maximal möglicher Ausnutzung ihres Kohlenstoffgehaltes zur Herstellung neuer Verbundwerkstoffe wiederverwertet werden.

Die Aufgabe wird mit einem Verfahren gemäß dem kennzeichnenden Teil des Patentanspruchs 1 gelöst. Die abhängigen Ansprüche geben Ausformungen der Erfindung wieder.

Nach dem Verfahren werden Abfälle oder Reststücke von Kohlenstoffasern oder von nach textilen Verarbeitungsverfahren zu Fäden, Kabeln, Kordeln etc. verarbeiteten Kohlenstoffasern oder von aus Kohlenstoffasern, Fäden oder Kabeln hergestellten textilen Faserverbunden wie Gewebe und Gelege oder auch von zum Beispiel durch Verwirbeln erzeugten Wirrlagen von Fasern, deren gemeinsames Merkmal es ist, daS die Oberfläche der Fasern mindestens teilweise mit einer carbonisierbaren Substanz überzogen ist, wiederverwertet. Den Hauptanteil dieser Stoffklasse nehmen die sogenannten Prepregs, bzw. nicht weiter verwertbare und daher Abfall darstellende Teile von Prepregs ein. Unter Kohlenstoffasern im Sinne dieser Erfindung werden im wesentlichen aus Kohlenstoff bestehende Fasern verstanden, die einer Temperaturbehandlung von mehr als 600 °C unterworfen worden sind.

Für diese Wiederverwertung sind nur Abfall- oder Reststücke geeignet, in denen die Fasern mindestens zum Teil mit einem noch nicht oder noch nicht vollständig ausgehärteten duroplastischen Kunstharz oder mit einem bei höheren Temperaturen erweichbaren Thermoplasten oder Elasten oder mit einem unter Temperatureinwirkung ebenfalls erweich- oder verflüssigbaren Pech überzogen sind und die in relativ dünnen, allenfalls einige wenige übereinandergeschichtete Lagen betragenden, noch in einen flexiblen Zustand überführbaren Gebilden vorliegen.

Derartige Anforderungen erfüllende Rest- oder Abfallstücke werden in eine Preßform eingebracht und dort regellos übereinanderliegend verteilt und dann zu einem der Form entsprechenden Formkörper gepreßt. Hierfür werden vorzugsweise Gesenkpressen eingesetzt, die heiz- und kühlbare Formen haben. Es können aber auch andere geeignete Preßeinrichtungen wie beispielsweise isostatische Pressen verwendet werden. Bei diesem Verdichtungsvorgang kleben unter mindestens teilweisem Entweichen von zwischen den Lagen befindlichen gas- oder dampfförmigen Bestandteilen die einzelnen Lagen zusammen und ergeben einen in Abhängigkeit vom eingebrachten Einsatzgut und dem angewandten Preßdruck mehr oder weniger dichten "grünen Körper", der gut manipulierbar ist. Als Einsatzgut verwendet man vorzugsweise Abfall- oder Reststücke gleicher Herkunft und gleichen Aufbaus. Es ist aber auch möglich, die Preßform mit wechselnden Lagen unterschiedlichen Ausgangsmaterials zu füllen, um durch das dann folgende Verpressen Schichtkörper mit von Schicht zu Schicht wechselnden Eigenschaften zu erhalten. Man kann sich dies beispielsweise für die Herstellung von Kohlenstoffkörpern mit über die Höhe oder die Breite variierenden Eigenschaften wie Wärmeleitfähigkeit, Festigkeit oder Porosität zunutze machen oder "grüne" Preßkörper mit porösen Einlagen für die Einstellung günstiger Entgasungseigenschaften bei den nachfolgenden thermischen Verfahren wie z.B. Brennen oder Graphitieren schaffen. Für die Herstellung von Körpern aus verschiedenen Schichten können auch bereits unterschiedlich vorverdichtete Schichtpakete oder -Lagen aus Rest- oder Abfallstücken, die auch unterschiedlichen Aufbau haben können, zu entsprechenden "grünen" Körpern verdichtet werden und schließlich ist es möglich, Rest- oder Abfallstücke der vorbeschriebenen Sorten ohne Beachtung ihres Aufbaus und ihrer Zusammensetzung in einer Preßform zu Körpern zu verdichten. Die Qualität von auf letztere Weise erzeugten Produkten genügt allerdings nur geringen Qualitätsansprüchen.

Die Verwendung heiz- und kühlbarer Preßformen ist zweckmäßig, damit in den Preßkörpern befindliche Anteile an Duroplastharzen ausgehärtet oder vorhandene Anteile an Thermoplasten oder Pechen bis auf die zum Verbinden der Lagen notwendige Viskosität erhitzt und danach zur Verfestigung der Körper wieder abgekühlt werden können. Nach dem Preßvorgang werden die durch Aushärten des Matrixharzes oder durch Erstarren des thermoplastischen Matrixharzes oder des pechartigen Matrixvorprodukts formstabil erhaltenen Körper aus der Preßform entnommen und einer Verkokungseinrichtung zugeführt.

Das Verkoken geschieht unter Ausschluß oxidierender Medien nach vorgewählten Temperatur-Zeitprogrammen. Es kann unter vermindertem, Umgebungs- oder Überdruck verkokt werden. Die Wahl der Verfahrensbedingungen richtet sich nach der Größe und der Rohdichte des zu verkokenden Körpers sowie nach der Art des in ihm enthaltenen Bindemittels und dessen Menge, bzw. nach dessen Gehalt an beim Verkokungsprozeß zu entfernenden Flüchtigen und wird, wie dies in der Technik der Herstellung von Kohlenstoffkörpern üblich ist, durch Versuche und Testverkokungen, gegebenenfalls in Verbindung mit physikalischen Messungen wie z.B. thermogravimetrischen Untersuchungen von Fall zu Fall festgelegt.

In der Verkokungseinrichtung werden die Körper unter Ausschluß von Sauerstoff oder anderen oxidierend wirkenden Substanzen auf eine Temperatur erhitzt, bei der eine Verkokung aller zersetzbaren organischen Substanzen erfolgt. Der bevorzugte, hierfür angewendete Temperaturbereich liegt zwischen 800 und 1200 °C. Zur Anpassung an den späteren Verwendungszweck oder an nachfolgende Verfahrensschritte können auch außerhalb dieses Bereiches liegende Verkokungstemperaturen angewandt werden. Die Verkokungszeit und die bei dem Verkokungsvorgang angewandten Temperaturgradienten richten sich nach dem gewünschten Ergebnis. Werden große Temperaturgradienten verwendet, kann innerhalb einer kurzen Zeit verkokt werden. Man erzielt dabei aber eine vergleichsweise geringe Koksausbeute. Mit geringer werdenden Temperaturgradienten werden bis zu einem Grenzwert steigende Koksausbeuten erhalten. Vorteilhafterweise arbeitet man mit einer Verkokungszeit von ca. 1 Woche und über die Zeit gemittelten Gradienten von 4 bis 6 K/h, wobei im kritischen Verkokungsbereich von 200 bis 550 °C niedrigere und außerhalb dieses Bereichs entsprechend größere Gradienten Verwendung finden. Große Mengen von wiederverwertbarem Material werden zweckmäßigerweise in Nachbrenneinrichtungen wie sie von der Kohlenstoff- und Graphitelektrodenproduktion her bekannt sind, z.B. Tunnel-, Herdwagen- oder Ringöfen unter Verwendung von Brennbehältern verkokt.

Die nach dem Verkoken erhaltenen, ganz aus Kohlenstoff bestehenden faserverstärkten Körper können direkt einer Verwendung zugeführt werden oder sie werden durch weitere Verfahrensschritte, auf die im folgenden eingegangen wird, weiterveredelt.

Nach dem Verkoken oder Brennen werden C-faserverstärkte Körper erhalten, die im wesentlichen aus gebranntem, also nicht graphitiertem Kohlenstoff bestehen, bzw. bei denen mindestens der Binder- oder Matrixkohlenstoff nicht graphitisch ist und die ein mehr oder weniger großes offenes Porenvolumen haben. Zur Anpassung an den jeweiligen, für sie vorgesehenen Verwendungszweck können die Eigenschaften dieser Körper durch weitere, in der Technik der Kohlenstoff- und Graphitkörperherstellung wohlbekannte Verfahrensschritte modifiziert oder verbessert werden. Diese Verfahrensschritte betreffen insbesondere das Nachverdichten der Körper durch mindestens teilweises Auffüllen ihres flüssigkeitszugänglichen Porensystems mit verkokbaren Flüssigkeiten wie z.B. Pechen oder Kunstharzen oder Mischungen davon und nachfolgendes Verkoken des Infiltrats sowie das Graphitieren. Das Nachverdichten kann, falls erforderlich, mehrmals wiederholt werden, es kann aber auch an graphitierten Körpern vorgenommen werden. Der Fachmann hält durch Kombination der beschriebenen Maßnahmen in Verbindung mit der Auswahl passender Imprägniermittel ein umfangreiches Instrumentarium zur Modifizierung der durch das Wiederverwertungsverfahren hergestellten gebrannten Körper in der Hand. Durch das Nachverdichten wird die Porosität der Körper verringert und ihre Festigkeit erhöht. Die Härte und Abriebfestigkeit bleiben hoch und die niedrigen Werte für die elektrische und die Wärmeleitfähigkeit werden nur geringfügig erhöht. Durch einen Graphitierungsprozeß können die meisten dieser Eigenschaften nachhaltig verändert werden. Die elektrische und die Wärmeleitfähigkeit werden um ein Vielfaches verbessert. Härte und Abriebfestigkeit werden verringert, wodurch der Körper eine gut gleitende Oberfläche mit vorteilhaften Reibeigenschaften erhält. Die hohe Festigkeit und der E-Modul sinken etwas ab, bleiben aber auf hohem Niveau. Durch Wahl bestimmter Graphitierungstemperaturen kann der Grad der Änderung der Eigenschaften beim Übergang vom verkokten in den graphitischen Zustand noch gesteuert werden. Für die Eigenschaften des Endprodukts haben aber auch Eigenschaften und Zusammensetzungen der der Wiederverwertung zugeführten Ausgangsprodukte Bedeutung. Es ist zu beachten, welche Art Fasern oder Matrix bzw. Matrixvorprodukte bei der Herstellung der C-Faser-Verbundwerkstoffe eingesetzt wurden. Für den Komplex der Fasern wären hier z.B. zu nennen: Kohlenstoffasern auf Basis Polyacrylnitril, Pech oder Cellulose, teilcarbonisierte, carbonisierte oder graphitierte Fasern, Hochmodul-, hochfeste Fasern oder Fasern hoher Festigkeit und hohen E-Moduls. Bei den Matrixmaterialien ist zwischen Matrixkohlenstoffen auf Basis von Kunstharzen mit vergleichsweise niedrigen Koksausbeuten wie Thermoplasten, Elasten, Polyestern oder Epoxidharzen, Kunstharzen mit hohen Koksausbeuten wie Phenolharzen oder Matrizes auf Basis von Pechen wie Steinkohlenteer-, Petrol- oder Mesophasenpechen zu unterscheiden. Durch Wahl geeigneter Ausgangsprodukte und gegebenenfalls gezielten Zusatz von weiteren kohlenstoffhaltigen Feststoffkomponenten sowie von Matrixvorprodukten in Verbindung mit der Anwendung geeigneter Verfahrensbedingungen lassen sich die Rest- und Abfallprodukte zu für viele verschiedene Anwendungen geeigneten Produkten wiederverwerten.

Als Anwendungsgebiete für so hergestellte Produkte seien beispielhaft Brems- und Reibbeläge, thermische Isolierplatten, z.B. für die Verwendung in Hochtemperaturöfen, Unterlage- und Chargierplatten für Öfen, Schmelzformen, Düsen, Füllkörper für Energie- und Stoffaustauschprozesse, Katalysatorträger, Elektrodenplatten, Apparateeinbauten für korrosive Medien genannt.

Die nach dem erfindungsgemäßen Verfahren hergestellten Produkte können durch weitere Behandlungen, z.B. mit gegen Oxidation schützenden Ausrüstungen, Metallisieren, Silicieren etc. speziellen Verwendungszwecken zusätzlich angepaßt werden.

Die Erfindung wird im folgenden anhand eines ausgewählten Ausführungsbeispiels weiter erläutert:
Abfallstücke von Prepregs aus einem Rovinggewebe mit Köperstruktur aus graphitierten Fasern und einem Phenolharz auf Resolbasis in Größen von bis zu 20 x 5 cm wurden ohne Beachtung einer Vorzugsorientierung in einer 325 x 325 x 100 mm großen Preßform so übereinandergelegt, daß auch die Ecken der Form einigermaßen ausgefüllt waren und dann mit einem Druck von 1,0 MPa zu einem "grünen Körper" von 20 mm Höhe und einer Rohdichte von 1,30 g/cm³ verpreßt. Die Härtung der Harzkomponente des Körpers erfolgte unter Aufrechterhalten des Preßdruckes nach folgendem Temperatur-Zeit-Schema:

| | |
|---|---|
| Raumtemperatur bis 80 °C | 30 Minuten, |
| 80 bis 120 °C | 60 Minuten, |
| 120 bis 150 °C | 60 Minuten. |

Zum Verkoken wurde der gehärtete Körper sodann in Stickstoffatmosphäre innerhalb von 144 Stunden auf 1000 °C erhitzt, wobei folgendes Temperatur-Zeitprogramm mit folgenden Temperaturgradienten verwendet wurde:

| | | |
|---|---|---|
| 20 bis 200 °C | 24 Stunden | 7,5 K/h, |
| 200 bis 550 °C | 96 Stunden | 3,7 K/h, |
| 550 bis 1000 °C | 24 Stunden | 18,8 K/h. |

Der nach dem Brennen erhaltene, aus Kohlenstoff bestehende poröse Körper wurde anschließend nach dem Vakuum-Druckverfahren mit einer methanolischen Lösung eines Phenolharzes auf Basis Novolak (Gewichtsverhältnis 70 % Novolak zu 30 % Methanol), die geringe Mengen Hexamethylentetramin enthielt, imprägniert. Vakuum-Druckverfahren bedeutet im vorliegenden Fall, daß der gebrannte Körper in einem Autoklaven zuerst evakuiert, dann unter Aufrechterhalten des Vakuums mit der Harzlösung überschichtet und dann auf diese Anordnung ein Druck von 6 bar aufgegeben wird. Nach dem Imprägnieren wurde der Körper erneut, wie vorbeschrieben, verkokt. Diese aus Imprägnieren und nachfolgendem Verkoken bestehende Nachverdichtungsbehandlung wurde insgesamt drei mal durchgeführt. Nach den einzelnen Verfahrensschritten hatten die Körper folgende Rohdichten:

| | |
|---|---|
| grüner Zustand | 1,30 g/cm³, |
| verkokter Zustand | 1,05 g/cm³, |
| 1 x nachverdichteter Zustand | 1,20 g/cm³, |
| 2 x nachverdichteter Zustand | 1,32 g/cm³, |
| 3 x nachverdichteter Zustand | 1,45 g/cm³. |

Der erhaltene Körper hatte im drei mal nachverdichteten Endzustand eine Biegefestigkeit von 150 MPa und einen E-Modul von 45 GPa.

Der Vergleich der Kenndaten zeigt, daß nach dem angegebenen Wiederverwertungsverfahren vergleichsweise leichte aber sehr feste hochtemperaturbeständige Werkstoffe erhalten werden, die für eine Vielzahl von Anwendungsmöglichkeiten geeignet sind.

## Patentansprüche

1. Verfahren zum Wiederverwerten von Abfällen und/oder Reststücken von
Kohlenstoffasern oder von Fäden, Kabeln, Tauen, Kordeln aus Kohlenstoffasern oder
von aus Kohlenstoff bestehenden Gelegen aus Fasern, Fäden, Kabeln, Tauen oder
von aus Kohlenstoffasern bestehenden Lagen von Geweben, Gestricken, Gewirken, Wirrlagen,
bei denen mindestens die Oberflächen der Fasern mit einer plastischen oder erweichbaren carbonisierbaren Substanz bedeckt sind,
dadurch gekennzeichnet, daß
in einem ersten Schritt die Abfälle und/oder Reststücke in einer Preßform regellos verteilt übereinandergeschichtet werden, danach in einem zweiten Schritt die in der Preßform befindlichen Abfälle oder/und Reststücke zusammengepreßt werden,
in einem dritten Schritt die in dem durch den zweiten Schritt erhaltenen Preßkörper befindliche carbonisierbare Substanz in einen festen Zustand überführt wird
und in einem vierten Schritt der Formkörper verkokt wird.

2. Verfahren nach Patentanspruch 1,
dadurch gekennzeichnet, daß
die nach dem Verkoken erhaltenen Formkörper mindestens einmal durch Imprägnieren mit einem flüssigen Kohlenstoffträger und nochmaliges Verkoken nachverdichtet werden.

3. Verfahren nach einem der Patentansprüche 1 und 2,
dadurch gekennzeichnet, daß
die im Rahmen des Wiederverwertungsverfahrens geformten und verkokten Körper nach dem Verkoken oder nach einem der nach einem Nachverdichtungsschritt durchgeführten Verfahrensschritte "Verkoken" auf Graphitierungstemperatur erhitzt werden.
